(19) Europäisches Patentamt
European Patent Office
Office européen des brevets

(11) **EP 3 390 514 B1**

## (12) EUROPEAN PATENT SPECIFICATION

(45) Date of publication and mention
of the grant of the patent:
**29.01.2020 Bulletin 2020/05**

(21) Application number: **16809866.3**

(22) Date of filing: **16.12.2016**

(51) Int Cl.:
*C08K 3/04* (2006.01)          *C08K 5/23* (2006.01)
*C08K 5/00* (2006.01)          *C08L 67/02* (2006.01)
*C08K 5/34* (2006.01)

(86) International application number:
**PCT/EP2016/081411**

(87) International publication number:
**WO 2017/103097 (22.06.2017 Gazette 2017/25)**

(54) **POLYMER COMPOSITION COMPRISING CARBON BLACK AND SHAPED OBJECTS MADE THEREOF**

POLYMERZUSAMMENSETZUNG ENTHALTEND NIGROSIN UND RUSS UND DARAUS HERGESTELLTE GEFORMTE OBJEKTE

COMPOSITION POLYMÈRE COMPRENANT DES NIGROSINE ET NOIR DE CARBONE ET OBJETS FAÇONNÉS FABRIQUÉS À PARTIR DE CELLE-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.12.2015 EP 15200645**

(43) Date of publication of application:
**24.10.2018 Bulletin 2018/43**

(73) Proprietor: **DSM IP Assets B.V.**
**6411 TE Heerlen (NL)**

(72) Inventor: **SIVASUBRAMONIAN, Esakimuthu**
**6100 AA Echt (NL)**

(74) Representative: **DSM Intellectual Property**
**P.O. Box 4**
**6100 AA Echt (NL)**

(56) References cited:
**US-A1- 2005 250 882     US-B1- 6 538 054**

**Description**

The invention relates to a composition comprising a polymer and carbon black and a shaped object comprising that composition for use in an electrical application.

Objects for use in an electrical application often must show a high Comparative Tracking Index (CTI, as expressed in Volts). The CTI is a measure for the electrical breakdown (tracking) properties of an insulating material. A low value for the CTI means that tracking takes already place at a low voltage. Because of the tracking short circuits are formed. The CTI must have a value high enough to guarantee that no tracking or short circuit of current occur along the surface of the shaped object under normal circumstances of use. This is especially important if shaped object is used under high voltages. This is for instance the case for a terminal block, relays and similar application.

It is often desirable that the shaped objects for use in an electrical application comprise a polymer composition having a dark grey or black color for example to classify the product. To provide a dark gray or black color, it is desirable to add carbon black as a pigment. A problem that occurs after the addition of carbon black is that the CTI decreases, which means that the tracking occurs at lower voltages. An alternative pigment or dye that can be used to obtain a polymer composition having a dark grey or black color is nigrosine. A problem with the use of nigrosine is however that it is not as effective as carbon black to color the polymer composition and it is even very high amounts of nigrosine are necessary to obtain a deep black color. Also with nigrosine the CTI decreases in these high amounts.

Object of the present invention is to provide a polymer composition having a dark grey or black color with a decreased Comparative tracking Index (CTI).

Surprisingly this object is obtained with a polymer composition containing:

- 0.01 - 0.1 wt% carbon black;
- 0.1 - 0.6 wt% nigrosine;
- 15 - 25 wt% flame retardant system;

and wherein the polymer composition contains polybutylene terephthalate (PBT). Weight percentages are given with respect to the total weight of the polymer composition unless stated otherwise.

In this way a polymer composition is obtained with a dark gray, black or even deep black color while obtaining a favorable high CTI value.

Nigrosine is a mixture of synthetic black dyes (CI 50415, Solvent black 5) made by heating a mixture of nitrobenzene, aniline and aniline hydrochloride in the presence of a copper or iron catalyst.

Preferably, the polymer composition has an L value of less than 32, as measured according to ISO 7724-1-2-3. More preferably, the L value is at least 28.

Preferably the composition contains 0.2 - 0.55 wt% nigrosine, more preferably 0.3 - 0.5 wt.% nigrosine. Preferably the composition contains 0.03 - 0.08 wt. % of carbon black.

The polymer composition contains polybutylene terephthalate (PBT).

The invention is especially advantageous in case the polymer composition contains 15 - 25 wt% of a flame retardant system. Such a system may consist of a single flame retardant, but often contains more than one component, for example a flame retardant, a synergist and an anti-dripping agent. It is often mandatory to use a polymer composition containing a flame retardant system for the production of shaped objects for use in electrical applications. This for instance to avoid that a fire spreads rapidly in an electrical installation. A disadvantage of the use of a flame retardant system is however that the CTI value becomes even more critical.

Examples of flame retardants that may be used include halogen free or halogen containing flame retardants.

Examples of halogen free flame retardants include metal phosphinates nitrogen containing and nitrogen/phosphor containing flame retardants.

Suitably, the metal phosphinate is a metal of a phosphinic acid of the formula $[R^1R^2P(O)O]^-_mM^{m+}$ (formula I) and/or a diphosphinic acid of the formula $[O(O)PR^1-R^3-PR^2(O)O]^{2-}_nM_x^{m+}$ (formula II), and /or a polymer thereof, wherein

- $R^1$ and $R^2$ are equal or different substituents chosen from the group consisting of hydrogen, linear, branched and cyclic C1-C6 aliphatic groups, and aromatic groups,
- $R^3$ is chosen from the group consisting of linear, branched and cyclic C1-C10 aliphatic groups and C6-C10 aromatic and aliphatic-aromatic groups,
- M is a metal chosen from the group consisting of Mg, Ca, Al, Sb, Sn, Ge, Ti, Zn, Fe, Zr, Ce, Bi, Sr, Mn, Li, Na, and K, and
- m, n and x are equal or different integers in the range of 1-4.

Suitable metal phosphinates that can be used as component B in the present invention are described for example in DE-A 2 252 258, DE-A 2 447 727, PCT/W-097/39053 and EP-0932643-B1. Preferred phosphinates are aluminium-, calcium- and zinc-phosphinates, i.e. metal phosphinates wherein the metal M = Al, Ca, Zn respectively, and combinations thereof. Also preferred are metal phosphinates wherein $R^1$ and $R^2$ are the same or different and are equal to H, linear or branched $C_1$-$C_6$-alkyl groups, and/or phenyl. Particular preferably, $R^1$, $R^2$ are the same or different and are chosen from the group consisting of hydrogen (H), methyl, ethyl, n-propyl, isopropyl, n-butyl, tert.-butyl, n-pentyl and phenyl. More preferably, $R^1$ and $R^2$ are the same or different and are chosen from the group of substituents consisting of H, methyl and ethyl.

Also preferably $R^3$ is chosen from the group consisting of methylene, ethylene, n-propylene, iso-propylene, n-butylene, tert.-butylene, n-pentylene, n-octylene, n-dodecylene, phenylene and naphthylene.

Highly preferably, the metal phosphinate comprises a hypophosphate and/or a $C_1$-$C_2$ dialkylphosphinate, more preferably Ca- hypophosphate and/or an Al-$C_1$-$C_2$ dialkylphosphinate, i.e. Al-dimethylphosphinate, Al-methylethylphosphinate and/or Al-diethylphosphinate. The best results are obtained if Al-diethylphosphinate is used.

The nitrogen containing and nitrogen/phosphor containing component (E) in the flame retardant elastomeric copolymer composition can be any nitrogen or nitrogen and phosphor containing compound that itself is a flame retardant and/or is a flame retardant synergist for phosphinate flame retardants. Suitable nitrogen containing and nitrogen/phosphor containing compounds that can be used as component (E) are described, for example in PCT/EP97/01664, DE-A-197 34 437, DE-A-197 37 72, and DE-A-196 14 424.

Preferably, the nitrogen containing synergist is chosen from the group consisting of benzoguanamine, tris(hydroxyethyl)isocyanurate, allantoine, glycouril, melamine, melamine cyanurate, dicyandiamide, guanidine and carbodiimide, and derivatives thereof.

More preferably, the nitrogen containing synergist comprises a condensations product of melamine. Condensation products of melamine are, for example, melem, melam and melon, as well as higher derivatives and mixtures thereof. Condensations products of melamine can be produced by a method as described, for example, in PCT/WO 96/16948.

Preferably, the nitrogen/phosphor containing flame retardant is a reaction product of melamine with phosphoric acid and/or a condensation product thereof. With the reaction product of melamine with phosphoric acid and/or a condensation product thereof are herein understood compounds, which result from the reaction of melamine or a condensation products of melamine, for example, melem, melam and melon, with a phosphoric acid.

Examples include dimelaminephosphate, dimelamine pyrophosphate, melamine phosphate, melamine polyphosphate, melamine pyrophosphate, melamine polyphosphate, melam polyphosphate, melon polyphosphate and melem polyphosphate, as are described for example in PCT/WO 98/39306. More preferably the nitrogen/phosphor containing flame retardant is melamine polyphosphate.

Preferably melamine cyanurate or melamine polyphosphate is used. More preferably melamine cyanurate is used.

More preferably the composition according to the invention contains Al-diethylphosphinate and melamine cyanurate.

If the composition contains a halogen containing flame retardant system, the system contains a halogenated organic compound, preferably brominated organic compound. Brominated aromatic compounds are even more preferred for their better stability. Suitable examples include low molar mass brominated compounds, such as ethylene bistetrabromophtalimide, pentabromobenzylacrylate, ethylene bispentabromophenyl, tetrabromobisphenol-A, and bromine-containing oligomers or polymers, like a polycarbonate from brominated bisphenol-A, brominated polystyrene, or poly(bromostyrene). Preferred are those compounds that show good thermal stability, and that are not suspect of producing dioxins at high temperatures, including for example ethylene bistetrabromophtalimide, pentabromobenzylacrylate, or poly(bromostyrene). Most preferably ethane-1,2-bis(pentabromophenyl) is used (sold as Saytex 8010, by Albermarle). Advantage is that it is highly effective, so that a relatively lower concentration may be used, which is favorable for all kind of properties. Moreover it provides a polymer composition which is even more thermally stable.

It is also possible that the bromine-containing flame-retardant compound is a poly(bromostyrene) (PBS). PBS differs from brominated polystyrene in that it is produced by polymerizing brominated styrene monomer, and not by brominating polystyrene. In addition to its favorable stability, preventing e.g. blooming effects and corrosion of contacted metals, the use of this compound also results in improved melt-flow behavior of the polyester composition. A high molar mass of PBS results in a polymer composition with improved mechanical properties, whereas the lower the molar mass the better the melt-flow. Therefore, the poly(bromostyrene) preferably has a weight averaged molar mass ($M_w$) of 20.000-100.000 g/mol. In general, the higher the bromine content of the compound the less flame-retardant additive is needed to obtain the desired flammability behavior of the polyester composition. This is of advantage for other properties like toughness. Thus, in a preferred embodiment the poly(bromostyrene) has a bromine content of 61-65 mass %.

Next to the halogen containing flame retardant the halogen containing flame retardant system composition according to the invention may contain a synergist, for example an antimony oxide, preferably antimony trioxide. The ratio halogen containing flame retardant: synergist preferably is between 3: 1 and 1: 1, more preferably between 2.5; 1 and 1.5: 1. The halogen containing flame retardant system preferably exists of the halogen containing flame retardant and the synergist.

The composition may contain 10 - 25 wt. % of the flame retardant system.

Preferably the polymer composition contains one or more impact modifiers, for example in a total amount of 5 - 10 wt.%.

Examples of impact modifiers include linear reactive and non-reactive impact modifier, core shell acrylics based and siloxane based impact modifiers. Good results are obtained with a core shell impact modifier comprising a core of an acrylate rubber and shell of polymethylmethacrylate (PMMA). Preferably an impact modifier containing butyl acrylate rubber is used.

The invention also relates to a shaped object for use in electrical applications, comprising the composition, preferably a terminal block or a relay.

A terminal block may be used to fasten or terminate wires. It is often used to connect wiring to a ground or electrical switches and outlets to the mains supply. A simple design has several single terminals positioned in a long strip, with an insulating frame and a clamping part

There are several types and structures for terminal blocks. For instance, the single feed-through structure that's used for wire-to-wire connection has one input and one output contact. The dual-level structure has two levels of contacts that help save space and simplify wiring. Types of terminal blocks include: ground circuit, fuse holders and thermocouple blocks.

Examples

*Materials used*

- Arnite ™T04 201, a PBT, delivered by DSM in the Netherlands.
- ICL-F2400-Brominated epoxy polymer, delivered by ICL in the Netherlands.
- Sb2O3, Antimony trioxide master batch, comprising 50 wt.% antimony trioxide, delivered by Campine in Belgium.
- Dupont Elvaloy AC 2615 an impact modifier delivered by Dupont.
- Arkema Lotader AX 8900 an impact modifier delivered by Arkema.
- Eurotard AD-70, anti-dripping agent, delivered by European Additives in Germany.
- Nigrosin MB deliverd Collids,UK
- Carbon black delivered by Cabot.

*Preparation of PBT composition by compounding*

The polymer compositions were prepared on a ZE40A UTX twinscrew extruder from Berstorff.

The barrel temperature was set at 260 - 300 °C, the screw speed was 300 RPM and the yield was 180 kg/hour. Components such as PET, nucleating agent and mould release agent, and colorants were dosed to the hopper as a preblend. The titanium dioxide was introduced via a side-feeder into the polymer melt. Extruded strands were cooled in water and granulated.

*Preparation of test specimens by Injection moulding*

Plaques for color measurements with dimension 80x80x3 mm have been injection moulded from pre-dried (4 hours at 90 °C under vacuum with nitrogen flow) granulate on an Engel 75 injection moulding machine with 25 mm diameter barrier screw. A nozzle with a length of 60mm was used to inject the material into a mould with high gloss inserts (With ISO 4287 roughness parameter N0, hand polished).

*Methods used*

CTI

The CTI was determined according to the testing method is specified in IEC standard 60112. To measure the tracking, 50 drops of 0.1% ammonium chloride solution are dropped on the material at 20 °C, and the voltage measured for a 3mm plaques.

Colour measurements

The colour co-ordinates L*a*b* have been determined with the Minolta CM-3700d spectrophotometer using a Xenon light-source, according to ISO 7724-1-2-3. The colour is measured in reflectance at 23°C on the 80x80x3 mm plaques; a white background, D65 illumination and geometry d/8° with observer 10°, and a round measuring area with a diameter of 25.4 mm have been used

Comparative experiment A and B

Comparative experiments A and B comprise only carbon black as black pigment. For the composition and the results of the CTI test and the color measurements see the table.

Comparative experiment C

Comparative experiments comprise only nigrosin as black colorant. For the composition and the results of the CTI test and the color measurements see the table.

Examples 1 and 2

Examples 1 and 2 comprise both nigrosin and carbon black. For the composition and the results of the CTI test and the color measurements see the table.

Table

| Comp exp/ example. | | | A | B | 1 | 2 | C |
|---|---|---|---|---|---|---|---|
| **Pocan 1400/PBT T04 201** | | | **67.55** | **67.3** | **67.5** | **67.5** | **67.3** |
| **Elvaloy AC 2615** | | | **5** | **5** | **5** | **5** | **5** |
| **LOTADER AX8900** | | | **3.5** | **3.5** | **3.5** | **3.5** | **3.5** |
| **Sb2 03 MB** | | | **6.25** | **6.25** | **6.25** | **6.25** | **6.25** |
| **F2400** | | | **16** | **16** | **16** | **16** | **16** |
| **Carnaubawax T1 Flakes** | | | **0.25** | **0.25** | **0.25** | **0.25** | **0.25** |
| **Phenolic antioxidant** | | | **0.25** | **0.25** | **0.25** | **0.25** | **0.25** |
| **Eurotard AD 70** | | | **0.7** | **0.7** | **0.7** | **0.7** | **0.7** |
| | | | | | | | |
| **carbon black** | | | **0.5** | **0.75** | **0.05** | **0.05** | |
| **Nigrosine black** | | | | | **0.5** | **0.5** | **0.75** |
| | | | | | | | |
| | | | **100** | **100** | **100** | **100** | **100** |
| | | | | | | | |
| | | CTI (Volts) | **300** | **275** | **600** | **600** | **325** |
| | | L* | **32** | **31** | **29.91** | **30.5** | **29.51** |
| | | a* | **-0.1** | **-0.1** | **0.07** | **0.15** | **0.09** |
| | | b* | **-1.2** | **-1.2** | **-2.89** | **-2.79** | **-2.73** |

From the results it is clear that with the examples according to the invention a deep black color (lower L-value) is obtained and that nevertheless a very favorable CTI of 600 Volts is obtained. This while with the comparative experiments the CTI value is only about 50 % of the one obtained in the examples while also a less deep black color is obtained.

**Claims**

**1.** A polymer composition **characterized in that** the polymer composition contains:

- 0.01 - 0.1 wt% carbon black;
- 0.1 - 0.6 wt% nigrosine;
- 15 - 25 wt% flame retardant system;

and wherein the polymer composition contains polybutylene terephthalate (PBT) and wherein wt% is with respect to the total weight of the polymer composition.

**2.** A polymer composition according to claim 1, **characterized in that** the L value of the composition is less than 32, as measured according to ISO 7724-1-2-3.

**3.** A polymer composition according to claim 1 or 2, **characterized in that** the composition has a Comparative Tracking Index (CTI) of at least 300 V as measured according to IEC standard 60112, preferably at least 350 V, more preferably at least 400 V and most preferred at least 500 V.

**4.** A polymer composition according to any of the preceding claims, **characterized in that** the polymer composition contains 0.2 - 0.55 wt.% nigrosine.

**5.** A polymer composition according to any of the preceding claims, **characterized in that** the polymer composition contains 0.3 - 0.5 wt.% nigrosine.

**6.** A polymer composition according to any one of the preceding claims, **characterized in that** the polymer composition contains 0.03 - 0.08 wt.% carbon black.

**7.** A polymer composition according to any of the preceding claims, **characterized in that** the flame retardant system is chosen from the group consisting of metal phosphinates, nitrogen containing and nitrogen/phosphor containing flame retardants and combinations thereof wherein the metal phosphinate is a metal of a phosphinic acid of the formula

$$[R^1R^2P(O)O]^-_mM^{m+} \qquad \text{(formula I)}$$

and/or a diphosphinic acid of the formula

$$[O(O)PR^1\text{-}R^3\text{-}PR^2(O)O]^{2-}_nM_x^{m+} \qquad \text{(formula II)},$$

and /or a polymer thereof, wherein

- $R^1$ and $R^2$ are equal or different substituents chosen from the group consisting of hydrogen, linear, branched and cyclic C1-C6 aliphatic groups, and aromatic groups,
- $R^3$ is chosen from the group consisting of linear, branched and cyclic C1-C10 aliphatic groups and C6-C10 aromatic and aliphatic-aromatic groups,
- M is a metal chosen from the group consisting of Mg, Ca, Al, Sb, Sn, Ge, Ti, Zn, Fe, Zr, Ce, Bi, Sr, Mn, Li, Na, and K, and
- m, n and x are equal or different integers in the range of 1-4.

**8.** A polymer composition according to claim 7, **characterized in that** the metal phosphinate comprises a hypophosphate and/or a $C_1\text{-}C_2$ dialkylphosphinate and the nitrogen containing and nitrogen/phosphor containing flame retardant is chosen from the group consisting of benzoguanamine, tris(hydroxyethyl)isocyanurate, allantoine, glycouril, melamine, melamine cyanurate, dicyandiamide, guanidine and carbodiimide, and derivatives thereof.

**9.** A polymer composition according to any one of the preceding claims, **characterized in that** polymer composition contains an impact modifier.

**10.** A shaped object for use in electrical applications, comprising the composition of any one of the preceding claims.

**11.** Shaped object according to claim 10, **characterized in that** the shaped object is a terminal block or a relay.

**Patentansprüche**

1. Polymerzusammensetzung, **dadurch gekennzeichnet, dass** die Polymerzusammensetzung enthält:

   • 0,01-0,1 Gew.-% Ruß;
   • 0,1-0,6 Gew.-% Nigrosin;
   • 15-25 Gew.-% Flammhemmersystem;

   wobei die Polymerzusammensetzung Polybutylenterephthalat (PBT) enthält und wobei die Gew.-%-Werte auf das Gesamtgewicht der Polymerzusammensetzung bezogen sind.

2. Polymerzusammensetzung gemäß Anspruch 1, **dadurch gekennzeichnet, dass** der L-Wert der Zusammensetzung, wie gemessen gemäß ISO 7724-1-2-3, weniger als 32 beträgt.

3. Polymerzusammensetzung gemäß Anspruch 1 oder 2, **dadurch gekennzeichnet, dass** die Zusammensetzung einen Comparative Tracking Index (CTI), wie gemessen gemäß dem IEC-Standard 60112, von wenigstens 300 V, vorzugsweise wenigstens 350 V, bevorzugter wenigstens 400 V und höchst bevorzugt wenigstens 500 V, aufweist.

4. Polymerzusammensetzung gemäß einem der vorstehenden Ansprüche, **dadurch gekennzeichnet, dass** die Polymerzusammensetzung 0,2-0,55 Gew.-% Nigrosin enthält.

5. Polymerzusammensetzung gemäß einem der vorstehenden Ansprüche, **dadurch gekennzeichnet, dass** die Polymerzusammensetzung 0,3-0,5 Gew.-% Nigrosin enthält.

6. Polymerzusammensetzung gemäß einem der vorstehenden Ansprüche, **dadurch gekennzeichnet, dass** die Polymerzusammensetzung 0,03-0,08 Gew.-% Ruß enthält.

7. Polymerzusammensetzung gemäß einem der vorstehenden Ansprüche, **dadurch gekennzeichnet, dass** das Flammhemmersystem ausgewählt ist aus der Gruppe bestehend aus Metallphosphinaten, stickstoffhaltigen und stickstoff/phosphorhaltigen Flammhemmern und Kombinationen davon, wobei das Metallphosphinat ein Metall einer Phosphinsäure der Formel

$$[R^1R^2P(O)O]^-_m M^{m+} \qquad\qquad \text{(Formel I)}$$

   und/oder einer Diphosphinsäure der Formel

$$[O(O)PR^1 - R^3 - PR^2(O)O]^{2-}_n M_x^{m+} \qquad\qquad \text{(Formel II)}$$

   und/oder eines Polymers davon ist, wobei

   - $R^1$ und $R^2$ gleiche oder verschiedene Substituenten ausgewählt aus der Gruppe bestehend aus Wasserstoff, linearen, verzweigten und cyclischen C1-C6-aliphatischen Gruppen und aromatischen Gruppen sind,
   - $R^3$ ausgewählt ist aus der Gruppe bestehend aus linearen, verzweigten und cyclischen C1-C10-aliphatischen Gruppen und C6-C10-aromatischen und aliphatisch-aromatischen Gruppen,
   - M ein Metall ausgewählt aus der Gruppe bestehend aus Mg, Ca, Al, Sb, Sn, Ge, Ti, Zn, Fe, Zr, Ce, Bi, Sr, Mn, Li, Na und K ist, und
   - m, n und x gleiche oder verschiedene ganze Zahlen in dem Bereich von 1-4 sind.

8. Polymerzusammensetzung gemäß Anspruch 7, **dadurch gekennzeichnet, dass** das Metallphosphinat ein Hypophosphat und/oder ein $C_1$-$C_2$-Dialkylphosphinat umfasst und der stickstoffhaltige oder stickstoff/phosphorhaltige Flammhemmer ausgewählt ist aus der Gruppe bestehend aus Benzoguanamin, Tris(hydroxyethyl)isocyanurat, Allantoin, Glycouril, Melamin, Melamincyanurat, Dicyandiamid, Guanidin und Carbodiimid und Derivaten davon.

9. Polymerzusammensetzung gemäß einem der vorstehenden Ansprüche, **dadurch gekennzeichnet, dass** die Polymerzusammensetzung einen Schlagzähmodifikator enthält.

**10.** Formkörper zur Verwendung bei elektrischen Anwendungen, umfassend die Zusammensetzung gemäß einem der vorstehenden Ansprüche.

**11.** Formkörper gemäß Anspruch 10, **dadurch gekennzeichnet, dass** der Formkörper ein Anschlussblock oder ein Relais ist.

**Revendications**

**1.** Composition polymère **caractérisée en ce que** la composition polymère contient :

• 0,01 à 0,1 % en poids de noir de carbone ;
• 0,1 à 0,6 % en poids de nigrosine ;
• 15 à 25 % en poids d'un système de retardateur de flamme ;

et la composition polymère contenant du poly(téréphtalate de butylène) (PBT) et les % en poids étant par rapport au poids total de la composition polymère.

**2.** Composition polymère selon la revendication 1, **caractérisée en ce que** la valeur L de la composition est inférieure à 32, telle que mesurée selon la norme ISO 7724-1-2-3.

**3.** Composition polymère selon la revendication 1 ou 2, **caractérisée en ce que** la composition possède un indice de suivi comparatif (ISC) d'au moins 300 V tel que mesuré selon le standard IEC 60112, préférablement d'au moins 350 V, plus préférablement d'au moins 400 V et le plus préféré d'au moins 500 V.

**4.** Composition polymère selon l'une quelconque des revendications précédentes, **caractérisée en ce que** la composition polymère contient 0,2 à 0,55 % en poids de nigrosine.

**5.** Composition polymère selon l'une quelconque des revendications précédentes, **caractérisée en ce que** la composition polymère contient 0,3 à 0,5 % en poids de nigrosine.

**6.** Composition polymère selon l'une quelconque des revendications précédentes, **caractérisée en ce que** la composition polymère contient 0,03 à 0,08 % en poids de noir de carbone.

**7.** Composition polymère selon l'une quelconque des revendications précédentes, **caractérisée en ce que** le système de retardateur de flamme est choisi dans le groupe constitué par des phosphinates de métal, des retardateurs de flamme contenant de l'azote et contenant de l'azote/du phosphore et des combinaisons correspondantes, le phosphinate de métal étant un métal d'un acide phosphinique de formule

$$[R^1R^2P(O)O]^-_m M^{m+} \qquad \text{(formule 1)}$$

et/ou d'un acide diphosphinique de formule

$$[O(O)PR^1-R^3-PR^2(O)O]^{2-}_n M_x^{m+} \qquad \text{(formule 2),}$$

et/ou un polymère correspondant,

- $R^1$ et $R^2$ étant des substituants identiques ou différents choisis dans le groupe constitué par hydrogène, des groupes aliphatiques en $C_{1-6}$ linéaires, ramifiés ou cycliques, et des groupes aromatiques,
- $R^3$ étant choisi dans le groupe constitué par des groupes aliphatiques en $C_{1-10}$ linéaires, ramifiés ou cycliques et des groupes aromatiques en $C_{6-10}$ et aliphatiques-aromatiques en $C_{6-10}$,
- M étant un métal choisi dans le groupe constitué par Mg, Ca, Al, Sb, Sn, Ge, Ti, Zn, Fe, Zr, Ce, Bi, Sr, Mn, Li, Na et K, et
- m, n et x étant des entiers identiques ou différents dans la plage de 1 à 4.

**8.** Composition polymère selon la revendication 7, **caractérisée en ce que** le phosphinate de métal comprend un hypophosphate et/ou un dialkylphosphinate en $C_{1-2}$ et le retardateur de flamme contenant de l'azote et contenant de l'azote/du phosphore est choisi dans le groupe constitué par la benzoguanamine, l'isocyanurate de tris(hydroxyéthyle), l'allantoïne, le glycourile, la mélamine, le cyanurate de mélamine, le dicyandiamide, la guanidine et le carbodiimide, et des dérivés correspondants.

9. Composition polymère selon l'une quelconque des revendications précédentes, **caractérisée en ce que** la composition polymère contient un agent de modification d'impact.

10. Objet façonné pour une utilisation dans des applications électriques, comprenant la composition selon l'une quelconque des revendications précédentes.

11. Objet façonné selon la revendication 10, **caractérisé en ce que** l'objet façonné est un bloc de jonction ou un relais.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 2252258 A
- DE 2447727 A
- WO W09739053 A
- EP 0932643 B1
- EP 9701664 W
- DE 19734437 A
- DE 1973772 A
- DE 19614424 A
- WO 9616948 A
- WO 9839306 A